# EUROPÄISCHE PATENTANMELDUNG

(11) **EP 4 353 468 A1**
(43) Veröffentlichungstag der Anmeldung: **17.04.2024**
(21) Anmeldenummer: 22201640.4
(22) Anmeldetag: 14.10.2022
(51) Int. Cl.: B32B 3/10, B32B 5/02, B32B 5/26, A45F 3/04, B68C 1/02, A01K 27/00

(54) **GEPOLSTERTER ARTIKEL**

(71) Anmelder: Freudenberg Performance Materials B.V., 6827 AV Arnhem (NL)
(72) Erfinder: Die Erfindernennung liegt noch nicht vor
(74) Vertreter: CPW GmbH

(57) **Zusammenfassung**

Die Anmeldung betrifft Artikel bestimmt für den mittelbaren oder unmittelbaren Kontakt mit dem Körper eines Menschen oder eines anderen Säugetiers. Der Artikel weist mindestens eine Polsterung auf. Die Polsterung weist eine dreidimensionale Wirrfasermatte aus makroskopischen Fasern auf, die miteinander verschlungen sind. Die Polsterung weist einen Anteil an offenem Volumen von mindestens 50 Vol.-% auf, sowie ein weiteres Element, das sich in größerer Entfernung vom Körper befindet als die Polsterung.

## Beschreibung

Die Erfindung betrifft Artikel, die eine Polsterung aufweisen.

Der generelle Zweck von Polsterungen ist es, auf den Körper eines Menschen oder eines Tieres oder auch auf einen Gegenstand einwirkende Kräfte zu dämpfen und besser zu verteilen.

Generell spielen Polsterungen in allen Bereichen eine Rolle, in denen der Körper von Menschen oder Tieren starken Kräften ausgesetzt ist. So verteilen Polster an den Griffen und Trageriemen von Taschen und Rucksäcken Kräfte so, dass sich die Griffe und Trageriemen nicht unangenehm in die Haut einschneiden oder zu Abschürfungen führen. Gleiches gilt für Zaumzeuge, wie sie an Zugtieren wie Pferden, Eseln oder Ochsen zum Einsatz kommen oder für Geschirre, die zum Führen von Hunden, insbesondere Arbeits- und Blindenhunden, aber auch zur Absicherung von Menschen beim Klettern, Fallschirmspringen, Gleitschirmfliegen oder in der Luft-, Berg-, Wasser-, Tiefen- und Höhenrettung verwendet werden. Speziell in diesen Bereichen werden solche Geschirre auch als "Rettungsgurte" bezeichnet, an denen Personen teilweise über große Höhen abgeseilt, aus z.B. Hubschraubern abgelassen oder in Hubschrauber eingeholt werden. Polstermaterialen des Standes der Technik bestehen häufig aus geschäumten Materialien oder speziellen, dreidimensionalen Gewirken oder Geweben. Allen diesen Materialien ist gemein, dass sie eine große Anzahl von Poren aufweisen und deswegen ausgesprochen saugfähig sind. Dementsprechend sind Polsterungen des Standes der Technik meist in der Lage, sehr große Mengen Flüssigkeit, insbesondere Wasser, aufzunehmen und es erst langsam wieder abzugeben. Diese lange Trocknungsdauer führt dazu, dass sich im feuchten Zustand in den Poren des Polstermaterials umfangreiche Ansammlungen von teilweise pathogenen, in jedem Fall aber in Bezug auf Hygiene problematischen Mikroorganismen bilden können. Neben den hygienischen Problemen führen solche Ansammlungen von Mikroorganismen auch zur Bildung unangenehmer "schimmeliger" oder "muffiger" Gerüche, die ganz besonders dann entstehen können, wenn es sich bei der aufgenommenen Flüssigkeit um Schweiß handelt, wie er sich insbesondere beim langen Tragen von Umhängetaschen oder Rucksäcken z.B. beim Wandern bilden kann.

Schlussendlich mindert die starke Aufnahme von Wasser durch Polstermaterialien auch den Tragekomfort. Insbesondere unter Rucksäcken können sich beim Tragen große feuchte Flecken in der Kleidung bilden, die insbesondere nach dem Ab- und wieder Aufsetzen des Rucksacks ein unangenehmes Kältegefühl vermitteln und die Auskühlung des Trägers verstärken.

Darüber hinaus sind die Polsterungen des Standes der Technik häufig in der Ökobilanz problematisch. Als Polsterung finden sehr häufig Blöcke oder Streifen aus Polyurethanschaum Verwendung, der nach momentanem Wissensstand nicht recyclebar ist. Die Kombination von Polyurethanschaum mit Ober- und Futtermaterialien aus gängigen Kunstfasern wie z.B. Polyester oder Polyamid führt so dazu, dass ausgediente gepolsterte Taschen oder Rucksäcke Mehrkomponentenabfälle darstellen, die, aufgrund der darin enthaltenen Materialien, nur unter großem Aufwand zu recyceln sind. Hierfür ist in der Regel eine manuelle Trennung der Materialien notwendig, die eine Wiederverwertung in der Regel unrentabel machen.

Aufgabe der Erfindung ist es nun, einen gepolsterten Artikel bereitzustellen, der die Nachteile des Standes der Technik nicht aufweist und der insbesondere hygienischer und komfortabler in der Anwendung ist und eine bessere Ökobilanz aufweist als der Stand der Technik.

Diese Aufgabe wird gelöst durch einen Artikel bestimmt für den mittelbaren oder unmittelbaren Kontakt mit dem Körper eines Menschen oder eines anderen Säugetiers, der Artikel aufweisend mindestens eine Polsterung, wobei die Polsterung eine dreidimensionale Wirrfasermatte aus makroskopischen Fasern aufweist, die miteinander verschlungen sind und die einen Anteil an offenem Volumen von mindestens 50 Vol.-% aufweist, sowie ein weiteres Element, das sich in größerer Entfernung vom Körper befindet als die Polsterung.

Bei dem weiteren Element kann es sich beispielsweise um ein textiles Obermaterial wie ein Gewebe, ein Gestrick, eine Folie oder einen Vliesstoff oder eine Kombination daraus, ein starres Gerüst oder weitere Partien eines Artikels im Sinne der vorliegenden Anmeldung handeln.

Unter dem Artikel nach der vorliegenden Anmeldung können sämtliche Artikel verstanden werden, die regelhaft mit Polsterungen versehen sind, insbesondere aber Sättel, Halsbänder, Gurte, Riemen, Gürtel, Geschirre, Taschen oder Rucksäcke.

Sättel sind nach üblicher Verkehrsauffassung Aufsätze, die auf dem Rücken eines Reittiers, in der Regel eine Pferdes aber auch eines Esels oder Kamels, platziert werden und dem Reiter einen komfortablen Sitz auf dem Tier ermöglichen. Der Sattel weist dabei auf der oberen Seite Polsterungen auf, um das Gesäß des Reiters vor zu starker mechanischer Beanspruchung zu schützen. Auch auf der unteren Seite des Sattels können Polsterungen angebracht sein, um den Tragekomfort für das Tier zu erhöhen.

Halsbänder sind Bänder, die in der Regel einen mechanischen Verschluss zum Beispiel durch eine Schnalle aufweisen und die üblicherweise um den Hals seines Tiers gelegt werden, um eine Führung an einer Leine zu ermöglichen. Dies trifft insbesondere auf Hunde zu. Halsbänder können jedoch in Form modischer Accessoires oder im Fetisch- und Erotikbereich auch beim Menschen zum Einsatz kommen.

Gurte und Riemen sind Bänder, die sich in der Regel durch hohe mechanische Festigkeit auszeichnen und die im Allgemeinen zu Halte- oder Fixierungszwecken zum Einsatz kommen. Zu nennen sind hier Sicherheitsgurte in Fahrzeugen wie Autos aber auch Tragegurte und -riemen zum Beispiel an Rucksäcken oder Geschirren. Die Begriffe "Gurt" und "Riemen" werden im Rahmen der vorliegenden Anmeldung synonym verwendet. Unter einem Gürtel ist ein Spezialfall eines Gurtes oder Riemens zu verstehen, der in der Regel um einen Gegenstand oder einen Körper gelegt und durch eine Schnalle zu einem Ring geschlossen werden kann wie zum Beispiel ein Gürtel zum Fixieren einer Hose am Körper.

Geschirre sind umfangreichere Kombinationen aus Gurten oder Riemen, die miteinander zu einer Art Netzwerk dergestalt verbunden sind, dass man sie an den Körper eines Menschen oder eines Tieres anlegen kann. Geschirre können vom Menschen angezogen werden wie ein Kleidungsstück, zeichnen sich aber dadurch aus, dass sie den Körper nicht großflächig bedecken, sondern dass das Gurtsystem Kräfte auf den Körper verteilt, so dass Geschirre beispielsweise ein bequemes Tragen oder Ziehen von Lasen ermöglichen. In Bezug auf Tiere sind in diesem Zusammenhang zum Beispiel Halfter oder Zaumzeuge zu nennen, die das Führen von Reittieren wie Pferden, Eseln oder Kamelen ermöglichen. Geschirre, die um den Brustbereich gelegt werden, kommen insbesondere bei der Führung von Hunden, speziell von Arbeitshunden wie Spür- oder Blindenhunden zum Einsatz. Auch am Menschen ist der Einsatz von Geschirren vielfältig möglich. So werden Sportgeräte wie Fall- und Gleitschirme durch Geschirre am Sportler fixiert, ebenso wie Seile zum Klettern und Abseilen. Auch im Rettungswesen kommen Geschirre zum Einsatz, insbesondere in der Wasser-, Berg-, Höhen- oder Tiefenrettung, beim Absetzen von Hilfskräften aus Hubschraubern oder bei der Bergung mit Hilfe von Hubschraubern. Darüber hinaus erlauben Geschirre auch das Tragen kleiner Kinder am Körper eines Erwachsenen vergleichbar dem Tragen in einem Tragetuch. Schlussendlich werden Geschirre am Menschen auch als Accessoires im Erotik-, Fetisch- und Bondagebereich verwendet.

Taschen sind Behältnisse zur Aufnahme anderer Gegenstände, die typischerweise mit der Hand oder umgehängt um den Körper getragen werden. Je nach Art der darin zu transportierenden Gegenstände und der Größe und der Gestalt des Behältnisses werden beispielsweise Sporttaschen, Schultaschen, Handtaschen, Reisetaschen, Aktentaschen, Computertaschen, Kamerataschen oder Erste-Hilfe-Taschen unterschieden.

Unter einem Rucksack ist ein Spezialfall einer Tasche zu verstehen, die durch zwei Schultergurte auf dem Rücken getragen wird. Manche Rucksäcke weisen darüber hinaus auch weitere Gurte auf, die es ermöglichen, sie um Brust oder Bauch zu schnallen. Ein Rucksack kann dementsprechend als eine Art Kombination aus einem Geschirr und einer Tasche aufgefasst werden. Je nach Art der zu transportierenden Gegenstände und je nach Größe und Design des Behältnisses werden verschiedene Arten von Rucksäcken unterschieden, zum Beispiel Wanderrucksäcke, Sportrucksäcke oder Rucksäcke zum Transport spezieller technischer Geräte wie zum Beispiel Laptop- oder Kamerarucksäcke. Spezielle Rucksäcke, bei denen das Behältnis ganz oder teilweise offen gestaltet ist, können auch zum Tragen jüngerer Kinder verwendet werden. Weniger gebräuchliche Begriffe für Rucksäcke sind "Tornister" oder "Stör".

Unmittelbarer Kontakt mit dem Körper bedeutet im Sinne der vorliegenden Anmeldung, dass der Artikel in direkter Berührung mit der den Körper eines Menschen oder eines Säugetiers bedeckenden Haut bzw. des den Körper bedeckenden Fells steht. Mittelbarer Kontakt mit dem Körper bedeutet im Sinne der vorliegenden Anmeldung, dass der Artikel zwar die Haut bzw. das Fell des Menschen bzw. des anderen Säugetiers nicht berührt, dass der Artikel aber durch eine oder mehrere dazwischen befindliche Schichten wie zum Beispiel Kleidungsstücke oder eine Satteldecke oder Schabracke vom Körper getrennt ist und auf diesen Körper Kräfte ausübt.

Im Sinne der vorliegenden Anmeldung kommen für den mittelbaren bzw. unmittelbaren Kontakt mit dem Artikel neben dem Körper des Menschen die Körper sämtlicher Säugetiere in Betracht, wobei Haus- und Nutztiere wie Hunde, Katzen, Pferde, Rinder, Ziegen, Schafe oder Kamele sicher die prominentesten Beispiele sind. Im Sinne der vorliegenden Anmeldungen werden unter "Pferden" und "Eseln" sämtliche Arten der biologischen Gattung *Equus* und insbesondere auch Kreuzungen verschiedener Arten dieser Gattung verstanden. Unter "Kamelen" werden sowohl ein- und zweihöckrige Altweltkamele wie auch Neuweltkamele wie Lamas und Alpakas verstanden.

Es sind allerdings auch Wildtiere denkbar, speziell im Bereich wissenschaftlicher Untersuchungen, wenn wandernden Tieren wie zum Beispiel Robben oder Walen mit Hilfe von Gurten, Riemen, Geschirren oder Gürteln im Sinne der vorliegenden Anmeldung Peilsender und/oder GPS-Tracker umgeschnallt werden.

Die Polsterung des Artikels wird über eine Wirrfasermatte sichergestellt. Eine Wirrfasermatte ist ein textiles Gebilde, das eine Dicke von einem Millimeter oder mehr aufweist und aus Fasern aufgebaut ist, die eine zufällige Anordnung aufweisen. Die Wirrfasermatte kann dabei die Gestalt eines Körpers wie zum Beispiel einem Quader, einem Oval oder einer Zunge haben, die komplett durch ein dreidimensionales Gerüst aus zufällig angeordneten Fasern ausgefüllt ist. Der Begriff "ausgefüllt" ist dabei nicht so zu verstehen, dass zwischen den Fasern keine Zwischenräume existieren, sondern so, dass die umhüllende Fläche des dreidimensionalen Gerüstes die Außenfläche des Körpers darstellt. Die Wirrfasermatte in Gestalt eines Körpers ist somit kein monolithischer Block, sondern enthält makroskopische Fasern mit Hohlräumen dazwischen. Das Gerüst kann dabei vollkommen unregelmäßig aufgebaut sein oder eine regelmäßige Struktur aufweisen, die von dem Ensemble zufällig angeordneter Fasern eingenommen wird.

Bei den Fasern in der Wirrfasermatter handelt es sich um makroskopische Fasern. Darunter sind Fasern zu verstehen, die eine Länge von mehr als einem Zentimeter und eine Dicke von mindestens 0,25 Millimeter aufweisen. In einer Ausführungsform handelt es sich bei den makroskopischen Fasern um Filamente. Unter Filamenten sind Fasern zu verstehen, deren Länge im Vergleich mit ihrer Dicke praktisch unendlich ist. Filamente können dementsprechend Längen im Bereich von etlichen Metern und sogar etlichen Kilometern aufweisen. Makroskopische Fasern im Sinne der Anmeldung weisen allerdings verglichen mit üblicherweise im Textilbereich verwendeten Fasern eine größere Dicke auf und können in Bezug auf ihre Haptik daher eine Anmutung von Drähten entwickeln. Die Dicke der makroskopischen Fasern kann dabei maximal 0,5 Millimeter oder sogar maximal 1 Millimeter betragen. Die makroskopischen Fasern können massiv oder hohl sein. Auch Kombinationen von hohlen und massiven makroskopischen Fasern in einer Wirrfasermatte sind möglich.

Der Querschnitt der makroskopischen Fasern kann jede mögliche Geometrie haben. Mögliche sind zum Beispiel kreisförmige, ovale oder dreieckige Querschnitte.

In einer Ausführungsform haben die makroskopischen Fasern eine Dicke von mindestens 0,25 Millimetern, mindestens 0,35 Millimetern oder mindestens 0,45 Millimetern und von höchsten 0,55 Millimetern, höchstens 0,65 Millimetern, höchstens 0,8 Millimetern, höchstens 1 Milimeter oder höchstens 1,5 Millimetern. In einer Ausführungsform hat die Matte eine Dicke von nicht weniger als 3, 4 oder 8 Millimeter und nicht mehr als 23, 40 oder 50 Millimeter, gemessen jeweils nach EN ISO 9863-1.

In einer Ausführungsform hat die Matte ein Flächengewicht von nicht weniger als 200 und nicht mehr als 800 g/m². In einer Ausführungsform beträgt das Flächengewicht der Matte nicht weniger als 400 g/m² und nicht mehr als 600 g/m². In einer Ausführungsform hat die Matte eine Restdicke von mindestens 70%, mindestens 80% oder mindestens 90% der ursprünglichen Dicke nach 1000, 5000, 10000, 50000 oder 80000 wiederholten Kompressionszyklen und eine restliche Eindrückhärte bei 25% Kompression von mindestens 70%, 80% oder 90% der ursprünglichen Eindrückhärte bei 25% Kompression nach 1000, 5000, 10000, 50000 oder 80000 wiederholten Kompressionszyklen nach DIN EN ISO 2439, Methode A.

In einer Ausführungsform hat die Matte eine Luftdurchlässigkeit quer zur Dicke von mindestens 10 l/(m²·s), mindestens 100 l/(m2·s), mindestes 500 l/(m²·s) oder mindestens 1000 l/(m²·s), jeweils bei 200 Pa und einem Druckgradienten von 0.5. In einer Ausführungsform hat die Matte eine Luftdurchlässigkeit parallel zur Dicke von mindestens 10 l/(m²·s), mindestens 100 l/(m²·s), mindestes 500 l/(m²·s) oder mindestens 1000 l/(m²·s), jeweils bei 200 Pa und einem Druckgradienten von 0.5. Unter der Dicke wird dabei die kleinste räumliche Ausdehnung der Matte verstanden.

Die Wirrfasermatte nach der vorliegenden Anmeldung kann so ausgestaltet sein, dass das Ensemble der makroskopischen Fasern ein Gerüst bildet, das eine große Menge leeren bzw. luftgefüllten Raum umschließt. Das Volumen an umschlossenem leeren Raum überwiegt dabei das Volumen, das das Volumen der die Matte bildenden makroskopischen Fasern um ein Vielfaches übertrifft. In einer Ausführungsform enthält die Matte mindestens 50 Vol.-%, mindestens 90 Vol.-%, mindestens 93 Vol.-%, mindestens 95 Vol.-% oder mindestens 97 Vol.-% an Luft bzw. offenem Volumen. Der Gehalt an offenem Volumen wird dabei bestimmt, indem man die Dichte der Matte zur Dichte des die makroskopischen Fasern aufbauenden Polymers in Bezug setzt.

Die makroskopischen Fasern der Matte sind in zufälliger Weise miteinander zu einem dreidimensionalen Gerüst mit regelmäßiger oder unregelmäßiger Struktur verschlungen. In einer Ausführungsform sind in einem solchen Gerüst die makroskopischen Fasern an ihren Kreuzungspunkten miteinander verbunden. Diese Verbindung kann je nach Material und Anwendungsbereich in allen dem Fachmann bekannten Art und Weisen ausgeführt sein. Möglich sind beispielsweise Klebebindungen oder thermische Bindungen (Verschweißungen). Die Wirrfasermatte gemäß der vorliegenden Anmeldung weist einen Anteil an offenem Volumen von mindestens 50 Vol.-% auf. In einer Ausführungsform beträgt der Anteil an offenem Volumen mindestens 90 Vol.-% oder 95 Vol.-%. Unter "offenem Volumen" wird dabei der Lufteinschluss vorhanden, der sich zwischen den zufällig angeordneten makroskopischen Fasern befindet. Der hohe Anteil an offenem Volumen bedingt dabei, dass die Matte nicht in der Lage ist, größere Mengen an Flüssigkeit zu halten, wie das beispielsweise bei feinporigen, schwammartigen Materialien der Fall ist. Vielmehr hat der große Anteil an offenem Volumen ein belüftende, Flüssigkeiten und Dämpfe ableitende Funktion, was nicht nur ein geringere Aufnahme von Flüssigkeit zur Folge hat, sondern auch eine wesentlich schnellere Trocknung als das bei einem schwammartigen Schaummaterial oder einem dichteren Gestrick der Fall sein kann.

In einer Ausführungsform weist die Matte dreidimensionale Strukturen auf, die in parallel zueinander verlaufenden Reihen oder Spalten angeordnet sind. Es ist wichtig zu betonen, dass diese dreidimensionalen Strukturen nicht durch einen regelmäßigen Verlauf der makroskopischen Fasern zueinander gebildet werden, sondern dass sie im Gegenteil dem Ensemble zufällig verlaufender makroskopischer Fasern aufgeprägt sind.

Bei den dreidimensionalen Strukturen kann es sich beispielsweise um Halbkugeln, Kuppeln, Pyramiden, Pyramidenstümpfe, Kegel, Kegelstümpfe, Zylinder, hexagonale Prismen oder Tetraeder handeln. Auch wellen- oder zackenförmige Strukturen mit V- oder U-förmigem Querschnitt sind möglich. Strukturen mit V- oder U-förmigem Querschnitt können sich dabei über eine vollständige Spalte bzw. Reihe hinziehen, so dass die Reihe z.B. als Wellenberg gesehen werden kann und die zwei Reihen voneinander trennende Vertiefung ein Wellental darstellt.

Die dreidimensionalen Strukturen einander benachbarter Reihen bzw. Spalten können dabei einander direkt benachbart sein und damit eine Art Raster bilden oder die Strukturen benachbarter Reihen oder Spalten können dergestalt gegeneinander versetzt sein, dass Strukturen, die durch eine oder zwei weitere Reihen bzw. Spalten von Strukturen voneinander getrennt werden, auf einer Linie senkrecht zur Reihe bzw. Spalte liegen.

Das Vorhandensein der dreidimensionalen Strukturen kann dazu führen, dass die Matte zwei Seiten mit unterschiedlicher Oberflächentextur ausbildet. Es ist dabei wichtig zu betonen, dass unter der Oberfläche der Matte nicht die Oberfläche der einzelnen makroskopischen Fasern zu verstehen ist, sondern die gedachte Umhüllende des von den makroskopischen Fasern ausgebildeten dreidimensionalen Körpers. Bei dieser gedachten Umhüllenden kann es um eine ebene Fläche handeln, aber auch um eine texturierte Fläche, die beispielsweise Noppen oder Dellen in verschiedenen Formen enthält.

Der Umstand, dass die Matte dreidimensionale Strukturen enthält, bedeutet allerdings nicht notwendigerweise, dass sich diese Strukturen in ihrer Oberfläche wiederfinden müssen. Vielmehr kann die Matte aus mehreren Lagen von zufällig angeordneten Fasern bestehen, die übereinander angeordnet sind. Dabei kann eine erste Lage die dreidimensionalen Strukturen aufweisen während eine zweite Lage beispielsweise planar ist und die dreidimensionalen Strukturen der ersten Lage abdeckt. Der Umstand, dass es sich bei der Matte um einen insgesamt dreidimensionalen Körper handelt, schließt dabei ausdrücklich nicht aus, dass die Matte Lagen enthält, bei denen es sich um zweidimensionale Körper handelt, sofern nur die Matte insgesamt dreidimensional ist.

Das Abdecken der dreidimensionalen Strukturen kann zum Beispiel die Funktion haben, eine Seite der Matte mit einer anderen Oberflächenhaptik ausstatten zu wollen. Die dreidimensionalen Strukturen der Matte können einen Beitrag zur polsternden Eigenschaft der Matte leisten, sich aber beim direkten oder indirekten Kontakt mit dem Körper unangenehm anfühlen.

Eine Abdeckung der Matte mit einer zweidimensionalen Lage kann auf einer Seite oder auf beiden Seiten der Matte erfolgen.

Die makroskopischen Fasern, die die Matte aufbauen, können thermoplastische Polymere wie Polyethylen, Polypropylen oder ein anderes Polyolefin, Polyamid-6, Polyamid-6,6, Polyamid-11, Polyamid-4,10 oder ein anderes Polyamid oder Polyethylenterephthalat (PET), Polytrimetylenterephthalat (PTT), Polybutylenterephthalat (PBT), Polyethylennaphthalat (PEN) oder einen anderen Polyester enthalten. Auch thermoplastische Elastomere wie entsprechende Polyurethane, Polyester oder Polyolefine sind als Materialien möglich.

In einer Ausführungsform können die makroskopischen Fasern aus mehreren Polymeren bestehen. Denkbar sind insbesondere makroskopische Fasern, in denen der Kern aus einem ersten Polymer besteht, der von einem Mantel aus einem zweiten Polymer umgeben ist. Dabei weist üblicherweise das Polymer im Mantel einen niedrigeren Schmelzpunkt auf als das Polymer im Kern. Auf diese Weise ist es möglich, die makroskopischen Fasern thermisch miteinander zu verbinden indem man sie auf eine Temperatur erhitzt, bei der lediglich der Mantel erweicht oder sich verflüssigt während der Kern fest bleibt.

Die Polymere im Kern und im Mantel der Faser können nach verschiedenen Kriterien ausgewählt werden, wobei ein wichtiges Kriterium der Schmelzpunkt ist. Möglich sind beispielsweise Filamente, bei denen der Kern aus einem Polyester mit einem hohen Schmelzpunkt besteht während der Mantel aus einem niedriger schmelzenden Polyamid besteht.

In einer weiteren Ausführungsform bestehen der Kern und der Mantel der Fasern aus verschiedenen Polymeren, die aber zur selben Polymerfamilie gehören. Denkbar ist beispielsweise, dass der Kern aus einem hoch schmelzenden Polyester wie PET besteht während der Mantel aus einem niedriger schmelzenden Copolyester besteht.

Neben Kern-Mantel-Fasern sind auch andere Arten von Fasern denkbar, beispielsweise solche, bei denen mehr als ein hochschmelzender Kern in eine Umgebung aus niedriger schmelzendem Polymer eingebettet ist, sog. "Islands-inthe-sea" -Fasern.

Denkar ist außerdem, dass der Kern aus einem hoch schmelzenden Polyamid wie Polyamid-6,6 beseht während der Kern aus einem niedriger schmelzenden Copolyamid besteht.

Unter "Copolyestern" und "Copolyamiden" werden dabei Polymere der jeweiligen Familien verstanden, die aus mehr als zwei Monomeren aufgebaut sind. Einfache Polyester bestehen aus einer Hydroxycarbonsäure (z.B. Milchsäure zu Polylactid) oder aus einem Lacton (z.B. Caprolacton zu Polycaprolacton) als einzigem Monomer oder sie werden aus einer Dicarbonsäure und einem Dialkohol (z.B. Terephthalsäure und Ethylenglycol zu PET). Bei Copolyestern kommen mehr verschiedene Monomere zum Einsatz als es für den Aufbau unbedingt notwendig ist. Dementsprechend enthält ein Copolyester zum Beispiel mindestens zwei verschiedene Hydroxycarbonsäuren, mindestens zwei verschiedene Lactone, mindestens zwei verschiedene Dicarbonsäuren oder mindestens zwei verschiedene Dialkohole. So sind beispielsweise Kombinationen für Terephthalsäure mit Ethylenglycol und Trimethylengylcol möglich. Typischerweise haben Copolyester niedrigere Schmelzpunkte als einfache Polyester.

Copolyester und Polyester gehören nach wie vor zur selben Polymerfamilie und können dementsprechend gemeinsam recycelt werden. Besonders vorteilhaft ist in diesem Fall ein Recycling durch Depolymerisation, bei der ein Gemisch der verschiedenen Monomere erhalten wird, das zum Beispiel durch Destillation getrennt werden kann.

Ähnlich sind die Verhältnisse bei Copolyamiden. Einfache Polyamide bestehen aus einer Aminocarbonsäure (z.B. Aminoundecansäure zu Polyamid-11), einem Lactam (z.B. ε-Caprolactam zu Polyamid-6) oder einer Dicarbonsäure und einem Diamin (z.B. Adipinsäure und Hexamethylendiamin zu Polyamid-6,6). Bei Copolyamiden kommen mehr verschiedene Monomere zum Einsatz. Dementsprechend enthält ein Copolyamid zum Beispiel mindestens zwei verschiedene Aminocarbonsäuren, mindestens zwei verschiedene Lactame, mindestens zwei verschiedene Dicarbonsäuren oder mindestens zwei verschiedene Diamine. So sind zum Beispiel Kombinationen denkbar zwischen Adipinsäure und Sebacinsäure mit Hexamethylendiamin möglich. Typischerweise haben Copolyamide niedrigere Schmelzpunkte als einfach Polyamide.

Copolyamide und Polyamide gehören nach wie vor zur selben Polymerfamilie und können dementsprechend gemeinsam recycelt werden. Besonders vorteilhaft ist in diesem Fall ein Recycling durch Depolymerisation, bei der ein Gemisch der verschiedenen Monomere erhalten wird, das zum Beispiel durch Destillation getrennt werden kann.

In einer Ausführungsform bestehen alle Lagen der Matte aus demselben Material. In einer Ausführungsform ist die Matte von einem textilen Material umgeben oder an mindestens einer Seite von textilem Material bedeckt, so dass sie von außen nicht als Solche zu erkennen ist und eingesetzt werden kann wie eine Polsterung auf Gestrick- oder Schaumbasis im Stand der Technik. Ist die Matte nicht vollständig von textilem Material bedeckt, so kann die mit textilem Material bedeckte Seite jene Seite sein, die dem Körper eines Menschen oder eines anderen Säugetiers zugewandt ist.

Das textile Material, das die Matte umgibt, kann dabei identisch sein mit einem Material, das das Obermaterial des Artikels bildet. Hierdurch kann sichergestellt werden, dass die Matte den optischen Eindruck des Artikels nicht beeinträchtigt. Bei dem textilen Material kann es ich um ein Gewebe, ein Gestrick oder ein Vlies handeln.

In einer Ausführungsform besteht der gesamte Artikel aus Polymeren der gleichen Polymerfamilie. Von Mitgliedern einer Polymerfamilie spricht der Fachmann, wenn Polymere aus chemisch verwandten Monomeren und durch die gleiche Art der chemischen Bindung aufgebaut sind. So gehören zum Beispiel Polytriphenylenterephthalat und Polyethylennaphthalat zur Polymerfamilie der Polyester, weil sie zwar aus unterschiedlichen (Trimethylenglycol und Terephthalsäure bzw. Ethylenglycol und Terephthalsäure) Monomeren aufgebaut sind, die Monomere aber chemisch verwandt sind (aliphatischer Dialkohol und aromatische Dicarbonsäure) und sie durch die gleiche chemische Bindung miteinander verknüpft sind (Esterbindung).

Polyamid-6 und Polyamid-6,6 sind aus unterschiedlichen Monomeren (ε-Caprolactam bzw. Hexamethylendiamin und Sebacinsäure) aufgebaut, gehören aber beide zur Polymerfamilie der Polyamide, weil ihre Monomereinheiten durch die gleiche Bindung (Carbonsäureamidgruppen) miteinander verknüpft sind. Polymere der gleichen Polymerfamilie sind in der Regel bedeutend einfacher gemeinsam zu recyceln als Polymere unterschiedlicher Polymerfamilien, weil sie z.B. auf eine einheitliche Art und Weise depolymerisiert und die dabei erhaltenen Monomere einfach (z.B. durch Destillieren) getrennt werden können.

In einer Ausführungsform besteht der gesamte Artikel aus demselben Polymer. Das heißt, dass das Obermaterial, das Innenfutter, die Polsterung und auch die zum Zusammenhalten der Komponenten notwendigen Nähfäden sowie für die Handhabung des Artikels außerdem nötige Komponenten wie Schnallen, Knöpfe, Ösen, Reißverschlüsse oder Klettverschlüsse aus demselben Polymer bestehen. Der Artikel dieser Ausführungsform kann, wenn er nicht mehr benötigt wird, als Ganzes recycelt werden, ohne dass aufwändige, mechanische evtl. sogar händische Materialtrennung erforderlich wäre.

In einer Ausführungsform ist die Matte Teil einer Fläche des Artikels, die für den direkten oder indirekten Kontakt mit dem Körper des Menschen oder eines anderen Säugetiers gedacht ist. Bei dieser Fläche kann es sich zum Beispiel um einen Trageriemen oder Teile davon handeln. Möglich ist auch eine größere Kontaktfläche.

Ein Trageriemen ist typischerweise ein bandförmiger Streifen aus Leder, Kunststoff oder textilem Material, der an mindestens zwei Stellen an einem Artikel wie zum Beispiel einer Tasche oder einem Rucksack befestigt ist und der eine Schlaufe bildet, an der man den Artikel mit der Hand ergreifen, ihn über der Schulter tragen und/oder um den Körper schnallen kann. Im letzteren Fall kann der Trageriemen unterbrochen sein und Verbindungsmittel wie Ösen, Schnallen, Knöpfe oder Haken aufweisen, die ein Umschnallen um den Körper ermöglichen. In einer Ausführungsform ist die Matte mit dem Leder, Kunststoff oder Textilmaterial des Trageriemens fest verbunden und mit einem Obermaterial wie zum Beispiel Gewebe in einer Weise kaschiert, dass sie von außen betrachtet mit dem Trageriemen eine Einheit bildet und dazu führt, dass eine oder, wenn mehr als eine Matte verwendet wird, auch zwei Seiten des Trageriemens gepolstert sind.

In einer Ausführungsform befindet sich die Matte in einem auf den Trageriemen aufgefädelten Polsterstück, das in einer weiteren Ausführungsform so mit dem Trageriemen verbunden ist, dass man es darauf verschieben und es so den benötigten Trageverhältnissen anpassen kann. Auf diese Weise wird ein hoher Tragekomfort auch mit einer vergleichsweise kleinen Matte erzielt.

Die Fläche zum mittelbaren oder unmittelbaren Kontakt mit dem Körper kann darüber hinaus auch eine Seitenfläche des Gegenstandes sein wie beispielsweise die Rückseite eines Rucksacks, der, wenn beide Trageriemen über der Schulter getragen werden, auf dem Rücken des Trägers aufliegt. Bei einem Sattel kann es sich sowohl auf die mit dem Gesäß des Reiters im Kontakt stehende Oberseite als auch um die mit dem Rücken des Reittiers im Kontakt stehende Unterseite handeln. Bei einem Riemen, einem Gurt, einem Gürtel oder einem Geschirr kann es sich um die dem Körper zugewandte Seite handeln. Dabei kann die Kontaktfläche eine einzige, die ganze Fläche bedeckende Matte enthalten, es können Teile der Kontaktfläche mit der Matte ausgestattet sein oder die ganze Fläche oder Teile davon können durch mehrere kleinere Matten bedeckt sein. Wenn es sich bei dem Artikel um eine Tasche oder einen Rucksack handelt, kann die Polsterung auch in weiteren, nicht zum direkten oder indirekten Kontakt mit dem Körper eines Menschen oder eines anderen Säugetiers vorgesehenen Bereichen vorhanden sein, insbesondere auch im Inneren der Tasche oder des Rucksacks. Die Polsterung kann dabei vom Innenfutter bedeckt sein. Sie kann auf der Innenseite der Außenwände ebenso vorliegen wie auf Wänden, die den Innenraum der Tasche und/oder des Rucksack in mehrere Bereiche aufteilen. Polsterungen im Inneren einer Tasche oder eines Rucksacks spielen insbesondere dann eine Rolle, wenn die Tasche oder der Rucksack zum Transport empfindlicher und/oder wertvoller technischer Ausrüstung wie Computern, Kameraausrüstung, Werkzeuge, medizinischem Gerät oder Messgeräten vorgesehen ist.

In einer Ausführungsform ist die Tasche oder der Rucksack vollständig von der Polsterung umgeben. Auf diese Weise wird neben einer Erhöhung des Tragekomforts und einer besseren Hygiene durch verringerte Wasseraufnahmefähigkeit der Polsterung auch der Stoßschutz von in der Tasche oder dem Rucksack transportierten Gegenständen verbessert.

In einer Ausführungsform weist die Tasche oder der Rucksack in der Polsterung einen oder mehrere elektrisch betriebene Ventilatoren auf, für eine beständige Luftzirkulation im Inneren der Wirrfasermatte sorgen. Die Ventilatoren können durch Batterien oder auf der Oberfläche des Rucksacks angebrachte Solarzellen betrieben werden. Auch ein Betrieb durch die Körperbewegung des Trägers ist möglich. Darüber hinaus kann die Polsterung der Tasche bzw. des Rucksacks nach dieser Ausführungsform mit einem Feuchtesensor versehen sein, der das Ein- und Ausschalten des oder der Ventilatoren steuert.

Neben einer Belüftung und Trocknung der Polsterung können die Ventilatoren so auch für eine Kühlung des Inneren des Rucksacks bzw. der Tasche sorgen.

## Patentansprüche

1. Artikel bestimmt für den mittelbaren oder unmittelbaren Kontakt mit dem Körper eines Menschen oder eines anderen Säugetiers, der Artikel aufweisend mindestens eine Polsterung, wobei die Polsterung eine dreidimensionale Wirrfasermatte aus makroskopischen Fasern aufweist, die miteinander verschlungen sind und die einen Anteil an offenem Volumen von mindestens 50 Vol.-% aufweist, sowie ein weiteres Element, das sich in größerer Entfernung vom Körper befindet als die Polsterung.

2. Artikel nach Anspruch 1, wobei die Matte einen Anteil an offenem Volumen von mindestens 90 Vol.-%, vorzugsweise mindestens 95 Vol.-% aufweist.

3. Artikel nach Anspruch 1 oder 2, wobei die Matte dreidimensionale Strukturen enthält, die in parallel zueinander verlaufenden Reihen und/oder Spalten angeordnet sind.

4. Artikel nach einem oder mehreren der vorherigen Ansprüche, wobei sich die makroskopischen Fasern an Kreuzungspunkten kreuzen und an diesen Kreuzungspunkten miteinander verbunden, vorzugsweise thermisch verbunden, sind.

5. Artikel nach einem oder mehreren der vorherigen Ansprüche, wobei es sich bei den dreidimensionalen Strukturen um Halbkugeln, Kuppeln, Pyramiden, Pyramidenstümpfe, Kegel, Kegelstümpfe, Zylinder oder Tetraeder oder um wellenförmige oder zackenartige Strukturen handelt.

6. Artikel nach einem oder mehreren der vorherigen Ansprüche, wobei die makroskopischen Fasern Polyethylen, Polypropylen oder ein anderes Polyolefin, Polyamid-6, Polyamid-6,6, Polyamid-11, Polyamid-4,10 oder ein anderes Polyamid oder Polyethylenterephthalat (PET), Polytrimetylenterephthalat (PTT), Polybutylenterephthalat (PBT), Polyethylennaphthalat (PEN) oder einen anderen Polyester enthalten.

7. Artikel nach Anspruch 6, wobei der gesamte Artikel aus Polymeren der gleichen Polymerfamilie besteht.

8. Artikel nach Anspruch 7, wobei der gesamte Artikel aus demselben Polymer besteht.

9. Artikel nach einem oder mehreren der vorherigen Ansprüche, wobei die Matte von einem textilen Material umgeben oder auf mindestens einer Seite von textilem Material bedeckt ist.

10. Artikel nach einem oder mehreren der vorherigen Ansprüche, wobei es sich bei dem Artikel um einen Sattel, ein Halsband, einen Gurt, einen Riemen, einen Gürtel oder ein Geschirr wie zum Beispiel ein Hundegeschirr, ein Katzengeschirr oder ein Pferdegeschirr handelt.

11. Artikel nach oder mehreren der Ansprüche 1 bis 9, wobei es sich bei dem Artikel um eine Tasche oder einen Rucksack handelt.

12. Artikel nach Anspruch 11, wobei die Polsterung in einer Fläche enthalten ist, die für den mittelbaren oder unmittelbaren Kontakt mit dem Körper eines Menschen oder eines anderen Säugetiers vorgesehen ist.

13. Artikel nach Anspruch 12, wobei die Polsterung in einem oder mehreren Trageriemen enthalten ist.

14. Artikel nach einem oder mehreren der Ansprüche 11 bis 13, wobei die Polsterung die Tasche oder den Rucksack vollständig umgibt.

15. Artikel nach einem oder mehreren der Ansprüche 11 bis 14, wobei die Polsterung im Inneren der Tasche oder des Rucksacks angebracht ist.
